# EUROPEAN PATENT SPECIFICATION

(11) **EP 2 544 992 B1**
(45) Date of publication and mention of the grant of the patent: **08.05.2019**
(21) Application number: 10710902.7
(22) Date of filing: 06.03.2010
(51) Int. Cl.: C01B 7/075, C01B 21/083

(54) **METHOD OF PROCESSING LIQUID CHLORINE CONTAINING NITROGEN TRICHLORIDE**
VERFAHREN ZUR VERARBEITUNG VON STICKSTOFFTRICHLORID ENTHALTENDEM FLÜSSIGEM CHLOR
PROCÉDÉ DE TRAITEMENT DE CHLORE LIQUIDE CONTENANT DU TRICHLORURE D'AZOTE

(43) Date of publication of application: 16.01.2013
(73) Proprietor: Noram International Limited, Dublin 2 (IE)
(72) Inventor: BRERETON, Clive, Richmond British Columbia V6Y 3H5 (CA); BERRETTA, Sergio, Vancouver British Columbia V6P 3R6 (CA)
(74) Representative: Zardi, Marco
(86) International application number: PCT/IB2010/000468
(87) International publication number: WO 2011/110880

(56) References cited:
- WO-A1-96/00187
- GB-A- 1 069 062
- US-A- 4 003 982
- "Ullmann's Encyclopedia of industrial chemistry" 1986, VCH , Weinheim , XP002582598 ISBN: 3527201068 vol. 6A, , pages 469-470 11.4 Chlorine Vaporization

## Description

### Background of the Invention

The invention pertains to the processing of a stream of liquid chlorine containing nitrogen trichloride from a chlorine production process, for example a chloralkali production process.

In the industrial production of chlorine, a small amount of by-product nitrogen trichloride (NCl₃) is produced. In a chloralkali production process, the amount formed is proportional to the amount of ammonia present in the salt fed to the process. Nitrogen follows the product chlorine leaving the chloralkali cell house. It is often removed from the product chlorine through an absorption step, for example in a chlorine scrubber, prior to chlorine compression and liquefaction. In the scrubbing step, nitrogen trichloride is absorbed into fresh, clean product chlorine and pushed down the scrubber and into a holding tank, referred to as the nitrogen trichloride decomposer, containing carbon tetrachloride or sometimes chloroform. In the decomposer, the solvent is maintained at a temperature above the boiling point of the chlorine. When the liquid chlorine contacts the warm solvent, it flashes back into the chlorine scrubber while nitrogen trichloride is absorbed by the solvent. Conditions in the decomposer are selected so that nitrogen trichloride slowly and safely decomposes. In time, tars and other impurities build up in the solvent, and the solvent must be periodically replaced, generating a waste stream that must be disposed of.

For reasons of both regulatory constraints and product quality (i.e. to reduce organic content in the final product chlorine), it is desirable to avoid the use of solvents such as carbon tetrachloride and chloroform in the chlorine production train.

A method of disposing of nitrogen trichloride without using carbon tetrachloride or chloroform solvents is described in US 3,568,409, Ferguson et al., in which gas chlorine from the drying tower is contacted with hydrochloric acid upstream of the compression and liquefaction steps. However, the process produces an acidic waste stream that must be disposed of or used elsewhere.

GB 1 069 062 A discloses that nitrogen trichloride can be destroyed in either gas chlorine or liquid chlorine by exposing it to a copper and nickel alloy.

WO 96/00187 discloses a process for decomposing nitrogen trichloride in chlorine by contacting a stream of gas chlorine with activated carbon.

It would be desirable to provide an improved process for disposing of the nitrogen trichloride removed from the chlorine stream without using organic solvents such as carbon tetrachloride or chloroform, and without generating a waste stream.

### Summary of the Invention

The invention provides a method of processing a stream comprising liquid chlorine containing nitrogen trichloride contaminant from the chlorine production train of a chlorine production process as defined in claims 1 to 6.

The invention further provides an apparatus for processing a stream comprising liquid chlorine containing nitrogen trichloride from a chlorine production train as defined in claims 7 to 9.

These and other features of the invention will be apparent from the following description and drawings of particular embodiments.

### Brief Description of the Drawings

Figure 1 is a schematic diagram of a first embodiment of the process of the invention, in which nitrogen trichloride is destroyed using a catalytic bed.
Figure 2 is a schematic diagram of a second embodiment of the process, in which nitrogen trichloride is destroyed using a superheater.

### Detailed Description of the Invention

In the following description and in the drawings, corresponding and like elements are referred to by the same reference characters.

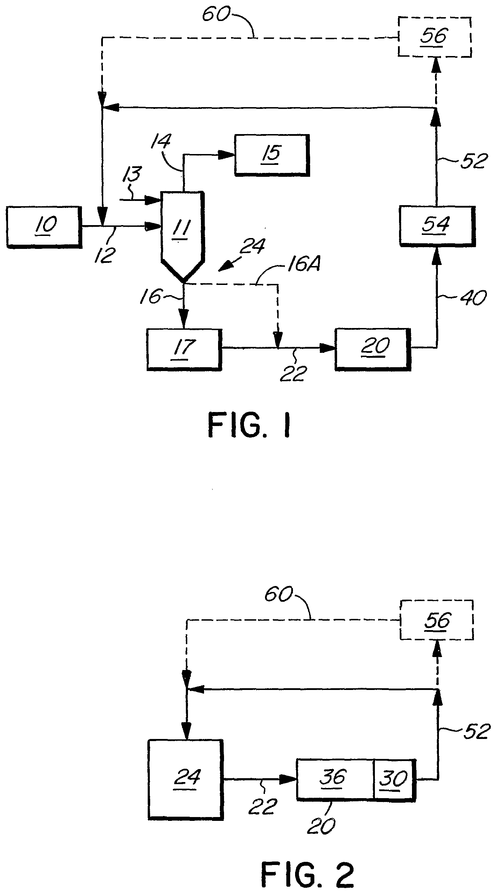

As illustrated in Figure 1, a chlorine vaporizer **20** receives a stream of liquid chlorine containing nitrogen trichloride (stream **22**) from the chlorine production train **24** of a chloralkali plant. The chlorine production train **24** includes a chloralkali cell house **10** in which chlorine gas is produced by the electrolysis of brine. A chlorine scrubber **11** receives a stream. **12** of gas chlorine from the cell house and a liquid chlorine stream **13.** Other unit operations usually present between the chloralkali cell house **10** and the chlorine scrubber **11** are not shown in the drawings. A gas chlorine stream **14** from the scrubber is fed to a compressor **15** and is thereafter liquified. From the bottom of the chlorine scrubber **11**, liquid chlorine, rich in nitrogen trichloride (stream **16**), is fed to a holding tank **17**, from which a stream **22** is routed to the vaporizer **20**. Alternatively, the liquid chlorine rich in nitrogen trichloride, may be fed directly from the scrubber **11** to the vaporizer **20** (stream **16A**) without using any holding tank. The stream **22** typically has 50 ppm or more of nitrogen trichloride, or more than 200 ppm.

The vaporizer **20** produces a stream **40** comprising chlorine gas with nitrogen trichloride gas. This stream is routed to one or more unit operations for the destruction of nitrogen trichloride. The gas leaving the nitrogen trichloride destruction step, i.e. chlorine gas and nitrogen gas, is recycled back to the chlorine production train of the chloralkali process. The process avoids the generation of a waste stream or the addition of other chemicals or solvents to deal with the nitrogen trichloride. The step of destroying the nitrogen trichloride can be carried out in various ways. As illustrated in the embodiment of Figure 1, the gas formed in the vaporizer **20** may be routed to a catalytic bed **54** in which the nitrogen trichloride is destroyed. The catalytic bed may contain, for example, Monel (trademark) as a catalyst to destroy nitrogen trichloride. The catalytic bed may be operated at temperatures in the range of minus 40 to 300° C., pressures in the range of 0.5 to 100 bar, and a residence time in the range of 0.1 seconds to 5 minutes.

The gas stream **52** leaving the catalytic bed, comprising chlorine gas and nitrogen gas, is recycled back to the chlorine production train **24**.

As an alternative to using a catalytic bed, the gas mixture evaporated in the vaporizer may be introduced into a superheater, which may be part of or separate from the vaporizer unit. In the embodiment of Figure 2, the vaporizer **20** includes a superheater zone **30** downstream of a boiling zone 36. The operating conditions in the superheater are selected so as to achieve substantially complete destruction of nitrogen trichloride. The average operating temperature of the superheater may be in the range of 30° to 300° C., the operating pressure in the range of 0.5 to 100 bar, and the residence time in the range of 0.5 seconds to 5 minutes. Alternatively, the average operating temperature may be in the range of 35° to 250° C., the operating pressure in the range of atmospheric pressure to 90 bar, and the residence time in the range of 1 second to 3 minutes.

The gas stream **52** leaving the superheater, comprising chlorine gas and nitrogen gas, is recycled back to the chlorine production train **24** of the chloralkali process.

Optionally, the process may use both a superheater and a catalytic bed to destroy the nitrogen trichloride. The catalytic bed may be within a superheater zone of the vaporizer, rather than being a separate unit.

Optionally, the gas leaving the nitrogen trichloride destruction step, e.g. the superheater **30** or catalytic bed **54**, may be routed to a temperature conditioning step **56** before being recycled back to the chlorine production train (stream **60**), as shown in Figures 1 and 2. This reduces the temperature of the gas stream leaving the nitrogen trichloride destruction step, which may be at a temperature of about 80° to 120° C., to a lower temperature for introduction into the chlorine train, which may be at a temperature of about minus 35° C.

Although the invention has been described in terms of various embodiments, it is not intended that the invention be limited to these embodiments. Various modifications within the scope of the invention will be apparent to those skilled in the art. The scope of the invention is defined by the claims that follow.

## Claims

1. A method of processing a stream comprising liquid chlorine containing nitrogen trichloride, comprising the steps of:
(a) receiving the stream (22) comprising liquid chlorine containing nitrogen trichloride from a chlorine production train (24) of a chlorine production process;
(b) vaporizing the liquid stream (22) of step (a) to produce a stream (40) comprising chlorine gas and nitrogen trichloride gas;
(c) processing the stream (40) produced by step (b) by destroying the nitrogen trichloride gas therein by means of:
(i) heating the stream (40) of step (b) to a temperature in the range of 30 to 300 degrees C at a pressure in the range of 0.5 to 100 bar for a residence time in the range of 0.5 seconds to 5 minutes,
and / or
(ii) introducing the stream (40) of step (b) into a catalytic bed (54) containing a nitrogen trichloride-destroying catalyst, producing a stream (52) comprising chlorine gas and nitrogen gas; and
(d) recycling the stream (52) produced by step (c) to the chlorine production train (24).

2. A method according to claim 1, wherein the chlorine production process comprises a chloralkali process.

3. A method according to any preceding claim, wherein step (c) is done in a superheater (30).

4. A method according to any preceding claim, further comprising, after step (c), conditioning the temperature of the stream (52) of step (c).

5. A method according to any preceding claim, in which the method is free of any waste stream production and any addition of nitrogen-trichloride treatment chemicals.

6. A method according to claim 1, wherein the step of destroying the nitrogen trichloride gas is done by both heating the stream (40) and introducing the stream (40) into the catalytic bed (54) containing the nitrogen-destroying catalyst.

7. An apparatus for processing a stream comprising liquid chlorine containing nitrogen trichloride, comprising:
(a) a chlorine vaporizer (20);
(b) an inlet for receiving the stream (22) comprising liquid chlorine containing nitrogen trichloride into the vaporizer from a chlorine production train (24) of a chlorine production process;
(c) a boiling zone (36) in the vaporizer downstream of the inlet;
(d) means (30, 54) for destroying nitrogen trichloride gas downstream of the boiling zone, comprising a superheater (30) and / or a catalytic bed (54); and
(e) means for recycling a stream (52) comprising chlorine gas and nitrogen gas from the nitrogen trichloride-destroying means to the chlorine production train (24).

8. An apparatus according to claim 7, wherein the means for recycling comprises a conduit operatively connecting the destroying means (30, 54) to the chlorine gas stream (12).

9. An apparatus according to claim 7, wherein the destroying means comprises both the superheater (30) and the catalytic bed (54).

## Patentansprüche

1. Verfahren zur Bearbeitung eines Stickstofftrichlorid enthaltendes, flüssiges Chlor aufweisenden Stromes, die Schritte umfassend:
(a) Empfangen des Stickstofftrichlorid enthaltendes, flüssiges Chlor aufweisenden Stromes (22) von einem Chlorherstellungszug (24) eines Chlorherstellungsprozesses;
(b) Verdampfen des flüssigen Stromes (22) des Schrittes (a) zum Erzeugen eines Chlorgas und Stickstofftrichloridgas aufweisenden Stromes (40);
(c) Bearbeiten des durch den Schritt (b) erzeugten Stromes (40) durch Zerstören des darin befindlichen Stickstofftrichloridgases mittels:
(i) Erhitzen des Stromes (40) des Schrittes (b) auf eine Temperatur im Bereich von 30 bis 300 Grad C bei einem Druck im Bereich von 0,5 bis 100 bar für eine Verweilzeit im Bereich von 0,5 Sekunden bis 5 Minuten,
und/oder
(ii) Einführen des Stromes (40) des Schrittes (b) in ein einen Stickstofftrichlorid zerstörenden Katalysator enthaltendes katalytisches Bett (54), Erzeugen eines Chlorgas und Stickstoffgas aufweisenden Stromes (52); und
(d) Rezirkulieren des durch den Schritt (c) erzeugten Stromes (52) zu dem Chlorherstellungszug (24).

2. Verfahren nach Anspruch 1, bei dem der Chlorherstellungsprozess einen Chloralkali-Prozess aufweist.

3. Verfahren nach irgendeinem vorhergehenden Anspruch, bei dem der Schritt (c) in einem Überhitzer (30) durchgeführt wird.

4. Verfahren nach irgendeinem vorhergehenden Anspruch, weiterhin aufweisend, nach dem Schritt (c), Konditionieren der Temperatur des Stromes (52) des Schrittes (c).

5. Verfahren nach irgendeinem vorhergehenden Anspruch, bei dem das Verfahren frei von jeglicher Abfallstromerzeugung und jeglicher Hinzufügung von StickstoffTrichlorid-Behandlungschemikalien ist.

6. Verfahren nach Anspruch 1, bei dem der Schritt des Zerstörens des Stickstofftrichloridgases sowohl durch Erhitzen des Stromes (40) als auch durch Einführen des Stromes (40) in das den Stickstoff zerstörenden Katalysator enthaltende katalytische Bett (54) durchgeführt wird.

7. Vorrichtung zur Bearbeitung eines Stickstofftrichlorid enthaltendes, flüssiges Chlor aufweisenden Stromes, die aufweist:
(a) einen Chlorverdampfer (20);
(b) einen Einlass zum Empfangen des Stickstofftrichlorid enthaltendes, flüssiges Chlor aufweisenden Stromes (22) in den Verdampfer von einem Chlorherstellungszug (24) eines Chlorherstellungsprozesses;
(c) eine Kochzone (36) in dem Verdampfer stromabwärts von dem Einlass;
(d) Mittel (30, 54) zum Zerstören von Stickstofftrichloridgas stromabwärts von der Kochzone, die einen Überhitzer (30) und/oder ein katalytisches Bett (54) aufweisen; und
(e) Mittel zum Rezirkulieren eines Chlorgas und Stickstoffgas aufweisenden Stromes (52) von den Stickstofftrichlorid zerstörenden Mitteln zu dem Chlorherstellungszug (24).

8. Vorrichtung nach Anspruch 7, bei dem die Mittel zum Rezirkulieren eine die Zerstörungsmittel (30, 54) funktionsmäßig mit dem Chlorgasstrom (12) verbindende Leitung aufweisen.

9. Vorrichtung nach Anspruch 7, bei dem die Zerstörungsmittel sowohl den Überhitzer (30) als auch das katalytische Bett (54) aufweisen.

## Revendications

1. Procédé de traitement d'un courant comprenant du chlore liquide contenant du trichlorure d'azote, comprenant les étapes consistant à :
(a) recevoir le courant (22) comprenant du chlore liquide contenant du trichlorure d'azote à partir d'une chaîne de production de chlore (24) d'un procédé de production de chlore ;
(b) vaporiser le courant liquide (22) de l'étape (a) pour produire un courant (40) comprenant du chlore gazeux et du trichlorure d'azote gazeux ;
(c) traiter le courant (40) produit par l'étape (b) en détruisant le trichlorure d'azote gazeux dans celui-ci par :
(i) le chauffage du courant (40) de l'étape (b) à une température dans la plage allant de 30 à 300°C à une pression dans la plage allant de 0,5 à 100 bar pendant un temps de séjour dans la plage allant de 0,5 seconde à 5 minutes,
et/ou
(ii) l'introduction du courant (40) de l'étape (b) dans un lit catalytique (54) contenant un catalyseur de destruction de trichlorure d'azote, produisant un courant (52) comprenant du chlore gazeux et de l'azote gazeux ; et
(d) recycler le courant (52) produit par l'étape (c) vers la chaîne de production de chlore (24).

2. Procédé selon la revendication 1, dans lequel le procédé de production de chlore comprend un procédé chlore-alcali.

3. Procédé selon l'une des revendications précédentes, dans lequel l'étape (c) est réalisée dans un surchauffeur (30) .

4. Procédé selon l'une des revendications précédentes, comprenant en outre, après l'étape (c), le conditionnement de la température du courant (52) de l'étape (c).

5. Procédé selon l'une des revendications précédentes, où le procédé est exempt de toute production de flux de déchets et de tout ajout de produits chimiques de traitement de trichlorure d'azote.

6. Procédé selon la revendication 1, dans lequel l'étape de destruction du trichlorure d'azote gazeux est réalisée à la fois en chauffant le courant (40) et en introduisant le courant (40) dans le lit catalytique (54) contenant le catalyseur de destruction d'azote.

7. Appareil de traitement d'un courant comprenant du chlore liquide contenant du trichlorure d'azote, comprenant :
(a) un vaporiseur de chlore (20) ;
(b) une entrée destinée à recevoir le courant (22) comprenant du chlore liquide contenant du trichlorure d'azote dans le vaporiseur à partir d'une chaîne de production de chlore (24) d'un procédé de production de chlore ;
(c) une zone d'ébullition (36) dans le vaporiseur en aval de l'entrée ;
(d) un moyen (30, 54) pour détruire le trichlorure d'azote gazeux en aval de la zone d'ébullition, comprenant un surchauffeur (30) et/ou un lit catalytique (54) ; et
(e) un moyen de recyclage d'un courant (52) comprenant du chlore gazeux et de l'azote gazeux depuis le moyen de destruction de trichlorure d'azote vers la chaîne de production de chlore (24).

8. Appareil selon la revendication 7, dans lequel le moyen de recyclage comprend un conduit reliant de manière fonctionnelle le moyen de destruction (30, 54) au courant de chlore gazeux (12).

9. Appareil selon la revendication 7, dans lequel le moyen de destruction comprend à la fois le surchauffeur (30) et le lit catalytique (54).
